Europäisches Patentamt

**European Patent Office**

Office européen des brevets

(11) Publication number: **0 115 434**
**A2**

(12) # EUROPEAN PATENT APPLICATION

(21) Application number: **84300496.1**

(22) Date of filing: **26.01.84**

(51) Int. Cl.³: **C 09 J 3/14**

(30) Priority: **27.01.83 US 461381**

(43) Date of publication of application:
**08.08.84 Bulletin 84/32**

(84) Designated Contracting States:
**AT BE CH DE FR GB IT LI LU NL SE**

(71) Applicant: **Exxon Research and Engineering Company**
**P.O.Box 390 180 Park Avenue**
**Florham Park New Jersey 07932(US)**

(72) Inventor: **Metzler, Donald Kenneth**
**17267 Monitor Avenue**
**Baton Rouge Louisiana(US)**

(72) Inventor: **Kresge, Edward Nathan**
**68 Parlin Lane**
**Watchung New Jersey(US)**

(74) Representative: **Dew, Melvyn John et al,**
**Esso Chemical Ltd. Esso Chemical Research Centre P.O.**
**Box 1**
**Abingdon Oxfordshire, OX13 6BB(GB)**

(54) Semicrystalline ethylene alpha-olefin copolymers for hot melt adhesives.

(57) Semicrystalline ethylene-alpha-olefin copolymers having a molecular weight of 1,000 to 40,000 and containing from 2 to 20% of at least one alpha-olefin having from 3 to 5 carbons are useful in formulating low viscosity hot melt adhesives, particularly in binary compositions with natural or synthetic resin tackifiers. The adhesives show excellent adhesive properties.

EP 0 115 434 A2

SEMICRYSTALLINE ETHYLENE ALPHA-OLEFIN COPOLYMERS
FOR HOT MELT ADHESIVES

This invention relates to hot melt adhesives and in particular to a class of semicrystalline ethylene copolymers and use of same for adhering articles.

BACKGROUND OF THE INVENTION

In recent years, film and sheeting prepared from a wide variety of polymeric products as well as paper and carboard have been fabricated into bags, envelopes, boxes, cartons and similar containers. During production of such containers, it is necessary to make a seal where two pieces join together or overlap. Such seals are are made by utilization of three principal methods, i.e. liquid adhesives, heat-sealing and hot-melt adhesives.

Each of such sealing methods has a specific area of utilization. For example, paper, cardboard and wood products are frequently bonded using liquid adhesives. These adhesives may include polymers soluble or dispersible in water, such as starches and animal glues. They may also include polymers soluble in organic solvents such as natural rubber or polychlorophene rubber. In recent years, use of these liquid adhesives has become less prominent because of certain disadvantages associated with their use. Since the liquid medium must be removed (absorbed by the substrate or evaporated) in order to form a strong bond, liquid adhesives are inherently time-consuming to use. In addition, the cost of energy to evaporate the liquid and equipment to recover and/or dispose of the liquid (if it is an organic solvent), can add significantly to the total cost of the bonding system. Furthermore, liquid adhesives may not satisfactorily bond all substrates (such as polyolefin films), and may swell or stain others (such as paper and cardboard).

Polyolefin films, such as those made of polyethylene, are generally heat-sealed since satisfactory adhesives for these materials are not available. Unfortunately, heat-sealing often causes embrittlement of the plastic at the seal and it makes the plastic material thinner at the seal, consequently leading to the formation of weak spots which may rupture under stress. Moreover, holes are frequently burned in the film if the heat-sealing instrument is too hot or if the time of application is too long.

Certain polyolefins, such as biaxially stretched polypropylene or calendered high density polyethylene cannot be heat-sealed. Accordingly, it is necessary to coat the surface of such polyolefin films with a substance which can be melted and sealed at a temperature lower than that of the film itself. For example, calendered high density polyethylene film must be coated with low density polyethylene and heat-sealed below the softening point of the high density material. It is known to use copolymers of ethylene and alpha-olefins as heat sealable coatings, e.g. see German Patent 2,351,923 and U.S. Patent 1,566,077, which teach of such coatings applied to polypropylene film where the ethylene copolymers contain up to 12% of propylene or butylene and 10-25% of higher alpha-olefins, respectively.

Hot melt adhesives (hereinafter designated HMA) combine some of the advantages of both liquid adhesives and heat sealing methods. HMA are applied in the molten state, but bonded on cooling to form adhesive bonds. Bond formation is fast, as in heat sealing, since solvent removal is not required. Properly selected HMA will not cause softening or embrittlement of polymer film substrates. And unlike heat sealable coatings, HMA can be applied in small amounts only where bonding is required rather than being coated over the entire surface of a polymer film.

Three types of polymers are known in the art to be used extensively for HMA: ethylene-vinyl acetate copolymer (EVA); low molecular weight polyethylene (LMPE) and amorphous polypropylene (APP). These may be used themselves as HMA or, more typically, may be formulated with resins, waxes or other ingredients.

Other polymers are also known to be used as HMA, e.g. Canadian patent 856,337 discloses the preparation of copolymers of "lower olefins" ($C_2$-$C_6$) with "higher olefins"

($C_6$-$C_{12}$), which can be used as hot melt adhesives.

In view of the above considerations, the provision of substances which can be used alone or in combination with resins as HMA to adhesively bind materials would be of great benefit to the art.

SUMMARY OF THE INVENTION

In accordance with the present invention, a wide variety of synthetic and natural materials are joined utilizing, as an adhesive, in part or in whole, a copolymer of ethylene and an alpha-olefin having from 3 to 5 carbons, of semicrystalline morphology and of a molecular weight ranging from 1,000 to 40,000.

Briefly, the adhesive of the invention is an adhesive composition comprising a copolymer of ethylene and at least one higher aliphatic alpha-olefin having from 3 to 5 carbon atoms, a molecular weight of from 1,000 to 40,000 and a degree of crystallinity of from 10 to 40%, including optionally a tackifier resin and/or wax, and/or other ingredients.

DETAILED DESCRIPTION OF THE INVENTION

As disclosed above the novel adhesive compositions of the invention feature in whole or part a semicrystalline (degree of crystallinity 10 to 40%) copolymer of ethylene and at least one alpha-olefin having from 3 to 5 carbons. As used herein, the term copolymer is intended to include terpolymers having three or more monomeric components, prepared from ethylene and two or more alpha-olefins having 3 to 5 carbons.

As set forth above, the copolymer adhesives of the present invention are prepared by polymerization of ethylene and at least one other olefinic monomer, the other said monomer being selected from the group consisting of linear or branched alpha-olefins, containing 3 to 5 carbon atoms, such as propylene, 1-butene, 3-methyl-1-butene, 1-pentene and the like.

The olefinic copolymer adhesives of the invention may contain from about 2 to about 40 percent by weight of the alpha-olefin and correspondingly from about 98 to about 60 percent by weight of ethylene.

The composition of the copolymers may be conveniently determined by infrared spectroscopy of cast or pressed polymer films, especially for the case in which the alpha-olefin is propylene. The weight percent ethylene can be calculated using the relationship

$$W_E = 100/(1+K \ (A_{1378}/A_{720}))$$

wherein $A_{1378}$ and $A_{720}$ are, respectively, the IR absorbances of the sample at 1378 $cm^{-1}$ and 720 $cm^{-1}$. K is a constant (normally $K=0.25$), defined as

$$K = 0.5 \ (A_{720}/A_{1378})$$

when measured using a standard ethylene/propylene copolymer of 66.7 wt% ethylene composition. Copolymer composition can also be determined by $C^{13}$ nuclear magnetic resonance spectroscopy.

The copolymers are prepared by polymerization of the alpha-olefin using an inert diluent such as a suitable aliphatic or aromatic hydrocarbon solvent, e.g. butane, hexane, heptane, mineral spirits, benzene, toluene and the like. Copolymers may also be prepared using the alpha-olefin co-monomer as a diluent.

Polymerization is conducted either batchwise or by a continuous process in the presence of a coordination polymerization catalyst comprising (1) an alkyl aluminum or alkyl aluminum halide compound, as described below, and (2) a transition metal halide or oxyhalide, also as described below. Suitable aluminum compounds correspond to the formula $R_nAl_mX_{3m-n}$, wherein R represents an aliphatic or aromatic hydrocarbon radical, Al represents aluminum, X represents a halogen radical, m = 1 or 2, and n is an integer from 1 to 3. Examples of suitable aluminum compounds include: triethyl aluminum, trimethyl aluminum, diethyl aluminum chloride, sesquiethyl aluminum chloride ($Et_3Al_2Cl_3$), ethyl aluminum dichloride, diethyl aluminum bromide, triphenyl aluminum, triisobutyl aluminum, etc. Suitable transition metal compounds include halides and oxyhalides of group 4b, 5b, 6b, and 7b metals of the periodic table of elements, including $TiCl_3$, $TiCl_4$, $VCl_4$, and $VOCl_3$.

Polymerization temperatures range from about 25°C to

- 5 -

0115434

about 125°C, although somewhat higher or lower temperatures may be used without deleterious effects.

The copolymers of the invention may have a range of molecular weights of from 1,000 to 40,000. Molecular weight control is achieved during polymerization by use of a suitable chain transfer agent, such as hydrogen.

Molecular weights of the copolymers are preferably determined by gel permeation chromatography (GPC) at 135°C using o-dichlorobenzene as solvent. Membrane osmomitry may also be used.

Specific gravities of the copolymers can be determined by weighting samples suspended in air and suspended in a non-solvent liquid such as isopropanol. Specific gravity is calculated using the following equation:

$$d = d_1 (W_{air}/(W_{air} - W_1))$$

wherein $W_{air}$ and $W_1$ are the weights of a given sample or air and in liquid, and $d_1$ is the specific gravity of the liquid.

Degree of crystallinity can be estimated from specific gravity data, using the relationship below which was originally developed for use with low density polyethylene:

$$X_C = (6.896 - 5.896/d) \times 100\%$$

wherein $X_C$ is the percent crystallinity and d is the specific gravity of the copolymer. Alternatively, degree of crystallinity can be measured by X-ray diffraction.

The term "hot melt system" is used to refer to compositions applied to a solid substrate in a molten state, the composition developing the specific properties for which it was formulated on cooling. Hot melt systems include hot melt adhesives, hot melt pressure sensitive adhesives, hot melt coatings, laminating compositions, hot melt road-marking compositions and wax blending compositions.

The ethylene-olefin copolymer of the invention preferably has an alpha-olefin content of from 5 to 20% by weight.

The semicrystalline ethylene copolymers of the invention have relatively low molecular weights, and thus relatively high melt indices. It is preferred that molecular weight of the copolymers are in the range of 1,000 to 40,000, more preferably in the range of 5,000 to 20,000 and molecular weights in the range of from 10,000 to 15,000 are particularly preferred.

Within the range of alpha-olefin content crystallinity and molecular weight outlined above, the choice of a particular combination of these parameters will be determined by the particular application for which the ethylene copolymer is intended. Increasing the alpha-olefin content has been found to decrease the degree of crystallinity (and as a result decrease the specific gravity) of the copolymer, leading to improvements in flexibility (at room temperature and particularly at low temperatures) and adhesive strength on non-porous substrates, such as aluminum foil or polyolefin films. When used to adhere relatively low-melting point polyolefin films, such as low density polyethylene (LDPE) or linear low density polyethylene (LLDPE), copolymers with lower ethylene content (about 70 wt% ethylene) show the particular advantage of allowing strong seals to be made without substantially deforming the substrate film. On the other hand, copolymers with higher ethylene content (about 90 wt% ethylene) show improved high temperature properties, such as shear adhesion fail temperature and pop-open temperature, particularly when applied to porous or fibrous substrates, such as paper or cardboard. Thus the copolymers of this invention are suited to a wide variety of substrates and uses by careful selection of the appropriate copolymer composition.

Similarly, decreasing the molecular weight of the copolymer results in decreased viscosity of the copolymer and of adhesive blends. Those skilled in the art of hot melt adhesives will recognize that proper control of melt viscosity is an important requirement for forming strong adhesive bonds. If the viscosity is too high, then the adhesive cannot be applied with conventional hot melt application equipment. If the viscosity is too low, then the adhesive will tend to soak into porous substrates or to be squeezed out of the bond region on heat sealing. Molecular weight is a significant factor in adhesive performance variable as well. Higher molecular weight provides increased strength and toughness to adhesive bonds, and improves high temperature performance.

It is a particular advantage of the invention herein described that not only can copolymer composition and molecular weight be varied over wide ranges, but they can be varied independently, ( i.e., variation of copolymer composition has little effect on molecular weight; variation of molecular weight has little effect on composition).

The ethylene copolymers of the invention may be used in hot melt systems in a variety of compositions. For some applications the copolymer alone may have sufficient tack in the molten state to be used alone as a hot melt composition, without addition of any tackifier or wax, although possibly with small amounts of additives such as antioxidants which are conventional in hot melt compositions. The ethylene copolymers may also be used in ternary compositions in conjunction with both a tackifier and a wax, but the viscosity of the copolymer of the invention is such that for most applications the addition of a wax as a viscosity improver is not needed.

In a further aspect the invention provides a HMA composition comprising an ethylene copolymer of the invention and a tackifier.

A tackifier employed in such binary compositions may be a natural or a synthetic resin. Among the natural resins which may be employed are the polyterpenes, rosins, rosin esters and derivatives, as well as their hydrogenated forms. Various synthetic petroleum resins may be employed, and suitable resins include products obtained by thermal or catalytic polymerization of aliphatic (including cyclic olefins) and/or aromatic hydrocarbons and hydrogenated derivatives thereof, as well as mixtures of such resins. By way of example, the so-called aliphatic resins may be obtained by polymerization of $C_5$ naphtha fractions containing $C_5$ conjugated diolefins such as isoprene, 1,3-pentadiene or mixtures thereof, or these fractions with other components such as cyclopentadiene, methyl cyclopentadiene or their dimers or codimers. Optionally these resins may be hydrogenated. The so-called aromatic resins may be obtained by polymerizing a petroleum fraction containing polymerizable aromatic hydrocarbons such as styrene, alpha-methylstyrene, vinyl toluene, vinyl xylene, propenyl benzene, indene, methyl indene and ethyl indene, and optionally hydrogenating the resultant resin. Other chemically modified resins may also be used, for example modification with alpha-unsaturated acid or anhydride. Examples of other resins include mixed aliphatic/aromatic resins and modified terpene resins such as phenolic modified terpene resins.

The binary HMA compositions of the invention may contain the ethylene copolymer and tackifier in a weight ratio of from 95:5 to 5:95. A high proportion of ethylene copolymer tends to result in high viscosity, better cohesive strength and toughness, whereas high resin content tends to produce more brittle products with a greater cold stickiness. Preferably the ethylene copolymer and tackifier are present in a weight ratio of from 95:5 to 50:50, and most preferably the binary compositions contain from 60 to 90% by weight of the composition of ethylene copolymer. However, it is a feature of the binary compositions that the properties of the binary composition do not vary as significantly as in conventional ternary compositions with varying ratios of ethylene copolymer and tackifier. Thus, while ternary compositions are frequently formulated for particular applications within relatively narrow ranges of ethylene copolymer, wax and tackifier content, the binary compositions show much greater flexibility, as well as greater predictability in terms of their behavior and performance.

As already indicated the binary compositions have low viscosity without having to resort to the addition of waxes. The viscosity chosen for a conventional HMA depends on its intended application. By way of example, conventional HMA compositions intended for packaging applications are formulated to give a viscosity 500 to 5000 Milli Pascal seconds mPa.s (at 180°C), while for bookbinding a viscosity of 3,000 to 10,000 mPa.s (at 180°C) is generally more appropriate. It is a feature of the binary compositions of the present invention that the overall viscosity is low enough to give the HMA acceptable handling properties, without resulting in an undesirable reduction in other properties.

For particular applications, it may be appropriate for the binary compositions of the invention to contain other components common in HMA formulation. Thus, for example, the compositions may also contain other polymers, antioxidants, plasticizers, fillers and flow improvers.

HMA prepared in accordance with this invention may be used to bond a variety of substrates including metals such as aluminum, polyolefins such as polyethylene and polypropylene, other polymers such as polyvinylchloride, polyamides and polyesters, paper, treated and untreated cardboard and wood. The HMA are useful in a wide range of applications such as wood-working, bookbinding, assembly of electronics, packaging, coating, laminating and in sanitary goods. The HMA of the invention are believed to be particularly useful in applications where good cold flexibility is required such as in packaging goods for storage at low temperatures, and in applications where a wide range of temperature may be expected.

Other possible applications for the HMAs of the invention include mold release agents, color masterbatch additives, paint and printing ink additives, toners, plastics additives, asphalt additives, plastisols, fruit coating agents and rubber processing aids.

The following illustrative examples will serve to more fully exemplify the preparation and utility of the copolymer adhesives of the present invention.

EXAMPLE 1: PREPARATION OF ETHYLENE/PROPYLENE COPOLYMER

The copolymer was prepared in a one gallon stainless steel continuous flow stirred tank autoclave-type reactor, equipped appropriately to control reactor temperature and pressure and the flow rates of various reactor feedstreams. Polymerization was carried out at 65°C, under pressure of 200 psig. Raw materials and feed rates were as follows:

| Hexane (solvent) | 11750 | g/hr |
|---|---|---|
| Ethylene | 915 | |
| Propylene | 400 | |
| Hydrogen | 1.28 | |
| $VOCl_3$ | 2.87 | |
| $Et_3Al_2Cl_3$ | 14.4 | |

Polymerization was terminated at the reactor outlet by injection of a small amount of isopropanol into the outlet stream. The polymer/hexane solution coming from the reactor was washed with slightly acidic water to remove catalyst residue. The solution was then pumped into a drum of vigorously agitated hot water ($80^\circ$-$90^\circ$C), causing the hexane to evaporate. Coagulated polymer was dried under vacuum to remove residual hexane and water.

Analysis of the product yielded the following results:

| Composition (wt% $C_2$) | 80.5 |
|---|---|
| $\overline{M}w$ by GPC | 17200 |
| Specific gravity | 0.874 |
| Degree of crystallinity (%) | 15.0 |

EXAMPLE 2:

PREPARATION OF ETHYLENE/PROPYLENE COPOLYMER

The copolymer was prepared and recovered as described in Example 1, but using the reactor feed rates indicated below:

| Hexane (solvent) | 11 750 | g/hr |
|---|---|---|
| Ethylene | 915 | |
| Propylene | 207 | |
| Hydrogen | 2.08 | |
| $VOCl_3$ | 2.87 | |
| $Et_3Al_2Cl_3$ | 14.7 | |

The following analytical results were obtained:

| Composition (wt% $C_2$) | 89.0 |
|---|---|
| $\overline{M}w$ by GPC | 8700 |

| Specific gravity | .895 |
| Degree of crystallinity | 30.8 |

### EXAMPLE 3:
### PREPARATION OF ETHYLENE/PROPYLENE COPOLYMER

The copolymer was prepared as described in Example 1, except that proportions of reactants were changed and cyclohexane was used as the solvent. Raw materials and feed rates were as follows:

| Cyclohexane | 13.400 | g/hr |
| Ethylene | 915 | |
| Propylene | 538 | |
| Hydrogen | 1.66 | |
| $VOCl_3$ | 2.87 | |
| $Et_3Al_2Cl_3$ | 12.6 | |

The product was washed and recovered as described in Example 1. Analysis found the following:

| Composition (wt% $C_2$) | 71.3 |
| $\bar{M}w$ (by GPC) | 9970 |
| Specific gravity | .873 |
| Degree of crystallinity (%) | 14.2 |

### EXAMPLE 4
### PREPARATION OF BINARY HMA COMPOSITIONS

Several polymers, prepared in essentially the same manner as described in Example 1, but with varying proportions of ethylene, propylene and hydrogen in the reactor feed, were formulated as binary HMA compositions. Each blend was prepared in a laboratory beaker equipped with an air-driven stirrer and electric heating mantle. Polymer and additives were charged to the beaker and agitated slowly while being heated. When the polymer (now molten) reached 300°F, a petroleum resin (Escorez 1304 sold by Exxon Chemical Americas, Houston, Texas) was added. The mixture was blended for 15 minutes at 300°, then poured out onto a cold surface and allowed to solidify.  The following test results were obtained:

| | A | B | C | D |
|---|---|---|---|---|
| **Polymer** | | | | |
| Composition (wt% $C_2$) | 72 | 80.5 | 89 | 72.5 |
| $\bar{M}w$ by GPC | 17200 | 15400 | 8700 | 25800 |
| **Adhesive blend** | | | | |
| Viscosity @350°F (Brookfield) Mpa.s | 6750 | 3100 | 1490 | 11800 |
| Shear Adhesion | | | | |
| Fail Temp (°C) | 48 | 61 | 80 | 51 |
| Brittleness Temp (°C) | – | –13 | 26 | –39 |
| Peel Strength on Paper (lbs/in) | .55 | .68 | .43 | .71 |

All of the four binary adhesive blends exhibit properties as seen from the above Table which make each blend useful in certain HMA applications.  Blends B and D exhibit excellent low temperature flexibility and would be useful for low temperature (sub-zero) packaging.  Blend C exhibits good high temperature performance and low melt viscosity.  Blend A is a general purpose HMA.

CLAIMS

1. An adhesive composition comprising a copolymer of ethylene and at least one higher aliphatic alpha-olefin having from 3 to 10 carbon atoms, a molecular weight of from 1,000 to 40,000 and a degree of crystallinity of from 10 to 50%.

2. A composition according to claim 1, wherein the higher alpha-olefin has from 3 to 5 carbon atoms.

3. A composition according to claim 2, wherein the higher alpha-olefin is propylene.

4. A composition according to claim 2, wherein the higher alpha-olefin is selected from the group consisting of 1-butene, 3-methyl-1-butene and 1 pentene.

5. A composition according to any of the preceding claims wherein the higher alpha-olefin is present in the copolymer in from 2 to 20 weight percent.

6. A composition according to any of the preceding claims wherein the copolymer has a degree of crystallinity of from 10 to 40%.

7. A hot melt adhesive composition comprising (1) a copolymer of ethylene and at least one higher aliphatic alpha-olefin having from 3 to 10 carbon atoms, a molecular weight of from 1,000 to 40,000 and a crystallinity of from 10 to 50%, and (2) a tackifier.

8. A composition according to claim 7, wherein the copolymer has a molecular weight of from 1,000 to 20,000.

0115434

9.  A composition according to claim 7 or 8, in which the tackifier is a resin, resin ester, resin derivative or a hydrogenated derivative thereof.

10. A composition according to claim 9, in which the tackifier is one or more petroleum resins obtained by thermal or catalytic polymerization of aliphatic and/or aromatic hydrocarbons or hydrogenated derivatives thereof.

11. A composition according to any of claims 7 to 10, in which the weight ratio of said copolymer to said tackifier is from 95:5 to 5:95.

12. A composition according to claim 11, in which the weight ratio of said copolymer to said tackifier is from 95:5 to 50:50.